# EUROPÄISCHE PATENTSCHRIFT

(11) **EP 1 086 407 B1**
(45) Veröffentlichungstag und Bekanntmachung des Hinweises auf die Patenterteilung: **08.10.2003**
(21) Anmeldenummer: 99936254.4
(22) Anmeldetag: 14.05.1999
(51) Int. Cl.: G05B 19/00

(54) **STEUERVERFAHREN FÜR EINEN INDUSTRIEROBOTER**
CONTROL METHOD FOR AN INDUSTRIAL ROBOT
PROCEDE DE COMMANDE POUR ROBOT INDUSTRIEL

(30) Priorität: 15.05.1998 DE 19821873
(43) Veröffentlichungstag der Anmeldung: 28.03.2001
(73) Patentinhaber: Institut für Werkzeugmaschinen und Betriebswissenschaften, 85747 Garching (DE)
(72) Erfinder: GRÄSER, Ralf-Gunter, D-82049 Pullach (DE); KLINGEL, Robert, D-85386 Eching (DE)
(74) Vertreter: Manitz, Finsterwald & Partner GbR
(86) Internationale Anmeldenummer: DE9901468
(87) Internationale Veröffentlichungsnummer: WO99060452

(56) Entgegenhaltungen:
- EP-A- 0 625 739
- WO-A-97/43703
- WO-A-97/46925
- US-A- 5 400 638
- "PROGRAMMABLE VERY LOW FREQUENCY MAGNETIC COMPENSATION FOR DISPLAYS" IBM TECHNICAL DISCLOSURE BULLETIN, Bd. 32, Nr. 2, 1. Juli 1989 (1989-07-01), Seite 440/441 XP000033486 ISSN: 0018-8689
- SOONS J.A. ET AL.: "Modeling the errors of multi-axis achines : a general methodology" PRECISION ENGINEERING, Bd. 14, Nr. 1, Januar 1992 (1992-01), Seiten 5-19, XP002120942

## Beschreibung

Die Erfindung betrifft ein Steuerverfahren für einen Industrieroboter, nachfolgend Roboter genannt, zum Verringern des Einflusses von Temperaturänderungen auf die Positionier- und Orientierungsgenauigkeit der Roboterhand, die nachfolgend als Wirkpunkt (TCP) des Roboters bezeichnet wird.

Unter Positioniergenauigkeit wird nachfolgend die Eigenschaft des Roboters verstanden, den TCP in einer vorgegebenen Raumkoordinate x, y, z zu positionieren.

Unter Orientierungsgenauigkeit wird die Eigenschaft verstanden, den TCP in den Raumkoordinate x, y, z jeweils in einen vorgegebenen Winkel ∠x, ∠y, ∠z zu orientieren.

Mit steigenden Genauigkeitsanforderungen und der Forderung nach stabilen und robusten Prozeßverläufen sind hohe Ansprüche in bezug auf die Positionier- und Orientierungsgenauigkeit verbunden. Besonders im Dauerbetrieb eines Roboters ist eine Drift der Positionier- und Orientierungsgenauigkeit festzustellen, deren Ursache Wärmequellen sind, die eine Verformung der kinematischen Kette des Roboters bewirken.

Es ist aus technischen Gründen nicht möglich, den Temperatureinfluß auf die kinematische Kette vollständig zu verhindern, da die Antriebsbaugruppen der kinematische Kette bei Belastung Wärme erzeugen, was zu zeitabhängigen Längen- und Winkeländerungen derselben führt. Auch durch eine thermosymmetrische Konstruktion können diese Effekte nicht vollständig ausgeschlossen werden.

Um Positionier- und Orientierungsfehler, die durch Temperatureinwirkung entstehen, zu verringern, ist aus dem Stand der Technik der Versuch bekannt, an ausgewählten Stellen der kinematischen Kette eines Roboters eine aktuelle Temperaturen an vorbestimmten Stellen von Bauteilen zu messen und diese Temperaturmeßwerte mittels eines Rechners zur Korrektur der Position des TCP zu verwenden.

So ist in der DE 33 02 063 eine Einrichtung zur Einflußgrößenkompensation an Werkzeug- oder Meßmaschinen sowie an Robotern beschrieben. Es wird vorgeschlagen, praktisch alle auftretenden Einflußgrößen, wie z. B. Temperaturen und Belastungen, zu messen und diese dann mit Korrekturwerten zu überlagern, die zuvor für alle diese Einflußgrößen ermittelt worden sind, um somit eine Kompensation des durch die Einflußgrößen bewirkten Positionierfehlers zu erzielen.

Die der DE 33 02 063 zugrunde liegende Erfindungsidee besteht demzufolge darin, jede der Einflußgrößen mit einer dazu passenden Meßvorrichtung zu bestimmen, d. h., die Einflußgröße Temperatur wird mittels einer Temperaturmeßvorrichtung bestimmt, die Einflußgröße Deformation durch Belastung wird mit einer Kraftmeßvorrichtung bestimmt usw.

Die Erfinder der vorliegenden Erfindung haben speziell für die Korrektur von Positionier- und Orientierungsfehlern, die durch Temperatureinflüsse entstehen, festgestellt, daß das in der DE 33 02 063 vorgeschlagene Verfahren extrem aufwendig und oftmals praktisch nicht durchführbar ist. So hat sich gezeigt, daß die in der DE 33 02 063 gegebene Anweisung, an ausgesuchten Stellen einer Maschine (in diesem Fall ein Roboter) Temperatursensoren anzuordnen, nicht zu dem erwünschten Ergebnis führt, da keine ausreichende Korrelation zwischen der am Roboter gemessenen Temperatur und der tatsächlich auftretenden Lageverschiebung des TCP gegenüber dem Sollwert hergestellt werden kann.

Daher wurde diese Kompensationsphilosophie von den Erfindern des vorliegenden Verfahrens nicht weiter verfolgt.

Weitere Vorrichtungen zur Temperaturkompensation werden in den folgenden Dokumenten beschrieben.

Die US 4, 668, 157 die als nächstliegender Stand der Technik angesehen wird, offenbart einen Roboter mit einer Vorrichtung zur Temperaturkompensation. Der Kalibrierzyklus wird ausgelöst, wenn die Temperatur an vorbestimmten Stellen der Armelemente des Roboters einen vorbestimmten Wert erreicht. Bei diesem Verfahren wird ebenfalls die aktuelle Temperatur an einer vorbestimmten Stelle am Roboterarm in Korrelation zu der Verschiebung des TCP gesetzt.

Insbesondere offenbart die US-A 4 668 157 ein Steuerverfahren für einen Roboter zum Verringern des Einflusses von Temperaturänderungen auf die Positionier- und Orientierungsgenauigkeit des Roboters, der eine Steuervorrichtung und einen Rechner aufweist, wobei:
der Roboter, an dessen kinematischer Kette ein Meßpunkt- vorzugsweise beim TCP - angeordnet ist, bei konstanter Umgebungstemperatur langsam mit dem Meßpunkt einen Raumpunkt im Arbeitsraum anfährt, wobei mit einem externen Meßsystem die koordinatenwerte des Meßpunktes an dem Arbeitsraumpunkt genau vermessen und gespeichert werden.

Die US 5, 400, 638 offenbart eine Vorrichtung zum Kalibrieren eines Roboters, bei der thermisch unveränderliche Referenzkörper zum Einsatz kommen. Es werden die thermisch bedingten Armlängenänderungen mittels der Methode der kleinsten Fehlerquadrate ermittelt, wobei Winkeländerungen unberücksichtigt bleiben.

Es ist die Aufgabe der Erfindung, die Positionier- und Orientierungsgenauigkeit eines Roboters weiter zu verbessern, um die vorstehend genannten Probleme zu beseitigen.

Die Aufgabe wird mit einem Verfahren nach Anspruch 1 gelöst.

Der Grundgedanke der Erfindung besteht darin, daß in einem nullten Verfahrensschritt eine genaue Vermessung des Wirkpunktes (TCP) vorzugsweise im gesamten Arbeitsraum des Roboters durchgeführt wird. Dabei werden Temperaturänderungen im Arbeitsraum und im Roboter selbst weitestgehend vermieden. Bei dieser Vermessung bewegt sich der Roboter sehr langsam, so daß durch die Antriebsbaugruppen wenig Wärme generiert wird und die Temperaturgradienten so klein wie möglich sind. Die Vermessung kann z. B. mit einem hochgenauen Laser-Weg- und Winkelmeß-System durchgeführt werden. Die Vermessung erfolgt so, daß Arbeitsraumpunkte mit einem Meßpunkt angefahren werden, und danach die Abweichungen der Positionen und/oder Orientierungen des Meßpunktes mit dem Laser-Weg- und Winkelmeß-System bestimmt werden, d. h. es wird ein Soll-lst-Vergleich durchgeführt. Als Meßpunkt kann vorzugsweise der TCP dienen. Es kann jedoch auch ein anderer Punkt auf der kinematischen Kette ausgewählt werden. Der Punkt muß immer so ausgewählt werden, daß die Positionier- und Orientierungsabweichungen der kinematischen Kette bezogen auf den PCT ausreichend genau bestimmt werden können.

Die in dieser Vermessung ermittelten Positionier- und Orientierungsfehler werden als stationäre Fehler bezeichnet. Durch die Vermessung sehr vieler Raumpunkte im Arbeitsraum wird durch bekannte mathematische Verfahren ein stationäres Fehlermodell entwickelt, das eine erste Basis für die Korrektur der temperaturbedingten Abweichungen bildet.

Im ersten, d. h. im nächsten Verfahrensschritt, werden noch einmal die gleichen Raumpunkte wie im nullten Verfahrensschritt angefahren. Dabei wird insbesondere die Bewegungsgeschwindigkeit wesentlich erhöht, wodurch in den Antrieben der kinematischen Kette Wärme generiert wird, die zu den bereits beschriebenen translatorischen und/oder rotatorischen Abweichungen des Meßpunktes vom Sollwert führen. Diese Abweichungen Au werden ebenfalls gespeichert, wobei mittels dem Fachmann bekannte mathematische Verfahren ein thermische Fehlermodell erstellt wird, das den jeweils aktuellen thermischen Zustand der kinematischen Kette beschreibt.

Der nullte und der erste Verfahrensschritt wird in der Regel nur einmal oder in größeren Zeitabständen, insbesondere nach Reparaturen, ausgeführt.

Im zweiten Verfahrensschritt wird aus der Menge der vermessenen Raumpunkte eine erste Untermenge U1 ermittelt. Für diese Untermenge U1 werden nur solche Raumpunkte ausgewählt, die ein solches Temperaturdriftverhalten aufweisen, das repräsentativ für das Temperaturdriftverhalten aller Raumpunkte ist, d. h. das Temperaturdriftverhalten eines Punktes aus der Untermenge U1 steht in jeweils einem vorbestimmten Verhältnis zu den verbleibenden Raumpunkten. Dieses vorbestimmten Verhältnis wird im nächsten Verfahrensschritt ermittelt.

Im dritten Verfahrensschritt sind im Arbeitsraum des Roboters temperaturstabile Referenzpunkte RP_{U1} in den Raumkoordinaten der Untermenge U1 angeordnet. An dem bisher verwendeten Meßpunkt ist an der gleichen Stelle ein Meßgerät fest angeordnet, mit dem die Positions- und Orientierungsabweichungen des Meßpunktes in Bezug auf die Referenzpunkte RP_{U1} bestimmbar sind. Zwischen den Arbeitsaktionen des Roboters werden nach einer vorbestimmten Zeitabfolge oder nach vorbestimmten Kriterien die Referenzpunkte RP_{U1} mit dem Meßgerät angefahren, wobei die aktuelle Positions- und Orientierungsabweichungen mittels Abstands- und/oder Winkelmessung zum jeweiligen Referenzpunkt ermittelt werden.

Als Referenzpunkte RP_{U1} werden z. B. temperaturstabile Körper mit Meßmarken zur optischen Abstands- und/oder Winkelmessung verwendet. Aus der Vielzahl der ermittelten repräsentativen Raumpunkte, die als Referenzpunkte RP_{U1} geeignet sind, müssen die ausgewählt werden, in denen die temperaturstabilen Körper den Bewegungsraum des Roboters und des Werkstücks, das ein- und ausgefahren wird, nicht versperren. Als Meßsysteme eignen sich berührungslos arbeitende Systeme (z. B. optische Verfahren) genauso wie taktile Systeme (z. B. induktive Wegmessung mittels Tauchspule).

Im vierten Verfahrensschritt werden die aktuellen Positionier- und Orientierungsfehler zwischen dem Meßpunkt und den Referenzpunkten RP_{U1} dem Rechner zugeführt. Im Rechner wird auf Basis der ermittelten Meßwerte das Fehlermodell an den aktuellen thermischen Zustand der kinematischen Kette des Roboters angepaßt und der Steuerelektronik zugeführt, so daß nunmehr alle Punkte im Arbeitsraum wieder genau angefahren werden können.

Es ist jedoch klar, daß das Fehlermodell insbesondere für solche Bereiche des Arbeitsraumes eine exakte Beschreibung der kinematischen Kette des Roboters liefern muß, in denen der Roboter die Arbeitsaktionen durchführt.

Dieses Verfahren weist gegenüber den aus dem Stand der Technik bekannten Verfahren folgende Vorteile auf:
- Es ist bei jeder Art von Robotern anwendbar.
- Es ist einfach,
so entfällt z. B. das äußerst zeitaufwendige Suchen nach Zusammenhängen zwischen der Oberflächentemperatur eines Bauteils und dem dazugehörigen Positionier- und 0rientierungsfehler.

Bei einer Verfahrensweiterbildung nach Anspruch 2 werden nur die Positionierfehler gemessen, d. h. der meßtechnische Aufwand, jedoch u. U. auch die Genauigkeit des Fehlermodells verringern sich.

Bei einer Verfahrensweiterbildung nach Anspruch 3 werden nur die Orientierungsfehler gemessen, d. h. der meßtechnische Aufwand, jedoch auch die Genauigkeit des Fehlermodells verringern sich.

Bei einer Verfahrensweiterbildung nach Anspruch 4 wird der nullte Verfahrensschritt nicht durchgeführt, wobei die zu ermittelnden Meßwerte durch bekannte gerätetypische Durchschnittswerte ersetzt werden, wodurch der Arbeitsaufwand verringert wird, jedoch u. U. auch die Genauigkeit der Fehlerkorrektur.

Bei einer Verfahrensweiterbildung nach Anspruch 5 werden der nullte und der erste Verfahrensschritt nicht durchgeführt, wobei die zu ermittelnden Meßwerte durch bekannte gerätetypische Durchschnittswerte ersetzt werden, wodurch der Arbeitsaufwand wesentlich verringert wird, jedoch auch die Genauigkeit der Fehlerkorrektur.

Bei einer Verfahrensweiterbildung nach Anspruch 6 wird eine Untermenge U2 ermittelt, deren Punkte nur für einen ausgewählten Bereich des Arbeitsraumes eine repräsentative Temperaturdrift aufweisen. Diese Weiterbildung ist dann zweckmäßig, wenn der Roboter immer nur in einem Teilbereich des Arbeitsraumes bewegungsaktiv ist.

Bei einer Verfahrensweiterbildung nach Anspruch 7 werden weitere Untermengen U3 bis UN ermittelt, deren Punkte für jeweils einen ausgewählten Bereich des Arbeitsraumes eine repräsentative Temperaturdrift aufweisen. Diese Weiterbildung ist dann zweckmäßig, wenn der Roboter in verschiedenen, aber vorbestimmten Teilbereichen des Arbeitsraumes bewegungsaktiv ist.

Bei einer Verfahrensweiterbildung nach Anspruch 8 werden im nullten und im ersten Verfahrensschritt von dem Meßpunkt die einzelnen Raumpunkte nicht nur aus einer, sondern aus unterschiedlichen Richtungen angefahren. Da jede der Anfahrrichtungen zu einer anderen Abweichung führen kann, werden somit für das Fehlermodell mehr Daten gewonnen, wodurch das Fehlermodell genauer wird. Dadurch kann die Positionier- und Orientierungsgenauigkeit des Roboters weiter verbessert werden.

Bei einer Verfahrensweiterbildung nach Anspruch 9 werden aus einer Untergruppe solche Raumpunkte ausgewählt, die näherungsweise auf einer Geraden liegen. Durch diese Maßnahme ist es möglich, einen sehr einfachen Kalibrierkörper zu schaffen, was die Gerätekosten senkt. In diesem Fall wird ein herkömmliches Präzisionslineal in die Gerade gelegt. Auf dem Präzisionslineal sind Meßmarken angeordnet, die von herkömmlichen Meßsystemen mittels eines Meßkopfes abgetastet werden.

Die Verfahrensweiterbildung nach Anspruch 10 entspricht dem Grundgedanken von Anspruch 9. Anstelle des Präzisionslineals wird als Referenzkörper eine Kugel oder ein prismatischer Körper verwendet. Referenzkörper mit einfacher geometrischer Gestalt lassen sich ohne große Kosten sehr präzise fertigen.

Die Verfahrensweiterbildung nach Anspruch 11 ist dann zu bevorzugen, wenn die als Referenzpunkte geeigneten Raumpunkte nicht auf oder in geometrisch einfachen Körpern liegen. Demzufolge wird ein temperaturstabiler Draht so gebogen, daß er durch die als Referenzpunkte geeigneten Raumpunkte verläuft.

Es ist für den Fachmann klar, daß die Referenzkörper immer so angeordnet werden müssen, daß der Arbeitsprozeß nicht gestört wird, d. h., daß die Referenzkörper weder die Bewegung des Roboters noch die Bewegung der Werkstücke oder anderer Vorrichtungen behindern.

Es ist als besonderer Vorteil herauszuheben, daß das erfindungsgemäße Verfahren unabhängig vom Bautyp des Roboters anwendbar ist. Weiterhin kann die Erfindung sowohl bei neuen Robotern als auch bei jenen, die bereits im Einsatz sind, angewendet werden.

Die Erfindung wird nunmehr an Hand eines Ausführungsbeispieles und den beigefügten Zeichnungen näher erläutert.

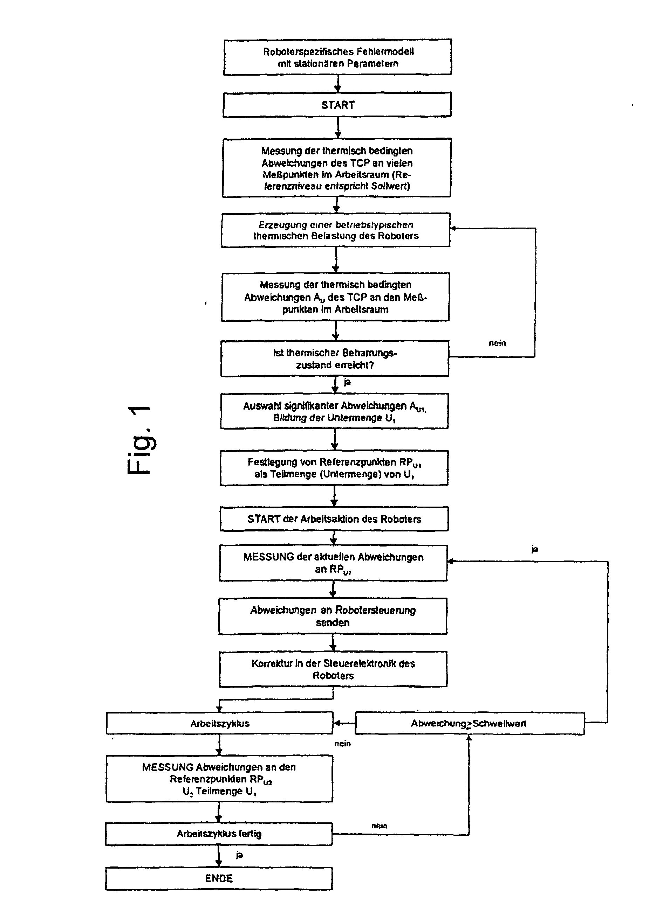

Fig. 1 zeigt eine Ausführungsform eines Programmablaufplans des erfindungsgemäßen Verfahrens.

Fig. 2 zeigt eine Kalibriervorrichtung zur Anwendung des Verfahrens.

Nachfolgend wird die in der Praxis übliche Vorgehensweise zur Anwendung der Erfindung an einem sechsachsigen Vertikalknickarmroboter mit offener kinematischer Kette und mit geschlossener Viergelenkkette zur Steuerung der zweiten und der dritten Achse beschrieben.

### 1. Anwendung des erfindungsgemäßen Verfahrens einschließlich der Generierung des Fehlermodells vor dem Produktionseinsatz

### 1.1. Erforderliche Ausrüstungen für die Bestimmung des Fehlermodells am Roboter

- Roboter mit Steuerung,
- Berührungsloses 3D-Entfernungsmeßsystem (Lasertrackersystem) zur Ermittlung der absoluten Positionsdaten,
- PC mit Kalibriersoftware zur Positionsdatenerfassung sowie zur Modellierung, Identifikation und Auswertung der Modellparameter.

### 1.2. Generierung des Fehfermodells

Das Vorgehen zur Generierung des Fehlermodells läßt sich in folgende drei Teilschritte gliedern:
- Modellbildung: Beschreibung der Endeffektorpose (Position und Orientierung) des Roboters durch eine Funktion der Stellung der Bewegungsachsen und der zu berechnenden Modellparameter,
- Messung: Präzise Vermessung der Position des Endeffektors in ausgewählten Arbeitsraumpositionen,
- Identifikation: Numerische Berechnung der Modellparameter, ausgehend vom nominalen Modell, so daß Positions- und Bahnabweichungen zwischen Modellfunktion und Messungen minimal werden.

### 1.2.1.Modellierung statischer und thermischer Parameter

Zur Bewegungsplanung des hier beschriebenen Roboters wird ein sogenanntes nominales Modell eingesetzt. Die Beschreibung der Endeffektorpose erfolgt dabei durch Transformationsmatrizen, die sich aus den Winkelwerten der sechs Achsmeßsysteme und den aus den Konstruktionszeichnungen des Roboters bekannten Achslängen (Nennmaße) ergeben.

Zur exakteren Beschreibung des realen Roboters wird mit Hilfe der Kalibriersoftware ein erweitertes mathematisches Modell, das sog. Fehlermodell, zusammengestellt. Dieses Modell beschreibt die Pose des Endeffektors als Funktion der Winkelwerte der sechs Drehachsen und der später bei der Identifikation zu quantifizierenden Parameter des Fehlermodells.

Die Modellierung beinhaltet folgende stationäre Parameter (Abbildung von konstruktions-, fertigungs- und montagebedingten Fehlergrößen):
- Länge der einzelnen Achselemente (Sockel, Unterarm, Oberarm, Hand),
- Schiefwinkligkeit von je zwei der Bewegungsachsen zueinander,
- Nullagenfehler der Winkelmeßsysteme der Drehachsen,
- Getriebefehler (Exzentrizität, Elastizität und Spiel),
- Gelenkungenauigkeiten (Elastizität und Spiel) sowie
- Lasteinflüsse (Bauteilelastizität).

Die Zusammensetzung der zu identifizierenden Parameter kann vom Anwender frei gewählt werden. Mit der Anzahl der verwendeten Parameter erhöht sich die Genauigkeit.

Zur Modellierung des thermischen Zustands der Roboterkinematik und der daraus resultierenden Temperaturdrift sind folgende thermische Parameter im Fehlermodell berücksichtigt:
- Thermisch bedingte Achslängenänderungen,
- Änderung der Schiefwinkligkeit der Bewegungsachsen aufgrund thermisch bedingter zwei- und dreidimensionaler Verformungen der Achselemente,
- Getriebeungenauigkeiten/-ungleichmäßigkeiten aufgrund thermisch bedingter Verspannungen bzw. der Spieländerung,
- Variables Gelenk- und Lagerspiel aufgrund thermischer Verspannungen der Drehachsenlager

### 1.2.2. Messung der Positionier- und Orientierungsgenauigkeit des Roboters Mit Hilfe des Lasertrackersystems wird die Absolutgenauigkeit des Roboters im Arbeitsraum bestimmt. Die gemessenen Endeffektorpositionen sind zusammen mit den aus der Robotersteuerung bekannten nominalen Posen die Eingangsdaten zur Berechnung der Modellparameter.

Bei der Auswahl der zu messenden Endeffektorpositionen ist darauf zu achten, daß diese in dem gesamten Arbeitsraum gleichmäßig verteilt sind. Je größer das für die Messungen ausgenutzte Arbeitsraumvolumen ist, um so exakter kann die Berechnung der Modellparameter erfolgen.

Der Detaillierungsgrad des Fehlermodells (Anzahl der zu identifizierenden Parameter) legt die benötigte Anzahl der zu messenden Posen fest.

### 1.2.3. Identifikation der stationären Parameter

Zur Bestimmung der stationären Parameter (konstruktions-, fertigungs- und montagebedingte Fehlergrößen) des Fehlermodells werden die unter 1.2.2. festgelegten Arbeitsraumpositionen unter stationären Bedingungen mit dem Roboter angefahren und gemessen. Zur Identifikation der unter 1.2.1. aufgelisteten Parameterarten sind bei dem betrachteten Roboter insgesamt 100 verschiedene Endeffektorposen zu messen.

Die Identifizierung der stationären Parameter erfolgt in diesem Beispiel:
- bei gleichbleibender Raumtemperatur (20 °C ± 2 K),
- unter Nennlast (an der Roboterhand) und
- unter Verwendung einer Bahngeschwindigkeit von 25 mm/s beim Anfahren und Verfahren zwischen den Meßposen (Vermeidung signifikanter Verlustleistungen in den Antrieben durch geringe Verfahrgeschwindigkeit).

Die zu messenden Positionen werden mit dem Roboter exakt (ohne Überschleifen) angefahren, mit dem Lasertrackersystem absolutgenau zum Roboterbasiskoordinatensystem gemessen und zusammen mit den entsprechenden nominalen Positionsdaten aus der Robotersteuerung in einer Datei abgelegt.

Die aus diesen Daten numerisch berechneten stationären Parameter beschreiben das reale Robotermodell (stationäres Fehlermodell) und bilden die Bezugsbasis für die anschließende Identifikation der thermischen Parameter (thermisch bedingte Fehlergrößen).

### 1.2.4. Identifikation der thermischen Parameter

Zur Identifikation der thermischen Parameter müssen die in 1.2.2 festgelegten Endeffektorposen regelmäßig in sogenannten Meßzyklen angefahren werden. Die Bahngeschwindigkeit zwischen den einzelnen Meßpunkten beträgt v = Vₘₐₓ [mm/s].

Zwischen den einzelnen Meßzyklen wird der thermische Zustand der Roboterstruktur durch ein Belastungsprogramm systematisch verändert. Dazu wird der Roboter permanent mit v = vₘₐₓ [mm/s] zwischen zwei Arbeitsraumpunkten bewegt. Zwischen diesen Arbeitsraumpunkten überstreicht jede Drehachse einen Winkel von 60°. Durch die Last an der Roboterhand (Nennlast, vgl. 1.2.3) wird eine maximale Belastung und damit eine starke Erwärmung aller Achsen gewährleistet.

Dieses Belastungsprogramm wird alle 10 min durch einen Meßzyklus für ca. 1 min unterbrochen und bis zum Erreichen des thermischen Beharrungszustandes zyklisch wiederholt. Der Beharrungszustand ist bei dem betrachteten Roboter nach ca. 6 bis 8 h erreicht. Die gemessenen thermisch bedingten Positions- und/oder Orientierungsabweichungen (Temperaturdrift) werden für jeden Meßpunkt in einer Datei abgespeichert.

Nach Erreichen des thermischen Beharrungszustandes werden die gesammelten Positionsabweichungen mittels der Kalibriersoftware ausgewertet.

Die Temperaturdrift an jedem Meßpunkt und die entsprechenden nominalen Positions- und/oder Orientierungsdaten, nachfolgend auch als Posedaten bezeichnet, aus der Robotersteuerung, sind Eingangsdaten zur Berechnung der thermischen Parameter.

Ergebnis dieser Auswertung ist ein Katalog variabler Parameter, die die Veränderung der Ausprägung der stationären Parameter in Abhängigkeit des thermischen Zustandes und der Untersuchungsdauer beinhaltet.

### 1.2.5. Auswahl signifikanter thermischer Parameter

Mit Hilfe statistischer Auswerteverfahren sind aus dem unter 1.2.4 erstellten Katalog diejenigen thermischen Parameter des Fehlermodells auszuwählen, die den größten thermisch bedingten Änderungsgrad und damit den signifikantesten Einfluß auf die Temperaturdrift beschreiben.

Abhängig vom konstruktiven Aufbau der Kinematik sind dies bei dem hier untersuchten Roboter die Achslängenänderungen Δa, Δb, Δc, Δd, Δe, Δf und die Getriebeungenauigkeiten in den Hauptachsen ΔA1, ΔA2 und ΔA3.

Zur Kompensation der Temperaturdrift müssen diese neun signifikanten Parameter während des Betriebs in Abhängigkeit des thermischen Zustandes aktualisiert und in die Bewegungsplanung des Roboters implementiert werden.

### 1.2.6. Zusammenstellung des thermische Fehlermodells

Nach der identifikation der stationären und signifikanten thermischen Parameter wird das thermische Fehlermodell zur exakten Bewegungsplanung aufgestellt.

In den mathematischen Algorithmen zur Bewegungsplanung werden, entsprechend der unter 1.2.1 durchgeführten Modellierung, alle stationären Parameter eingetragen und als nicht veränderbar deklariert.

Die unter 1.2.5 ermittelten signifikanten thermischen Parameter (im vorliegenden Fall Δa, Δb, Δc, Δd, Δe, Δf, ΔA1, ΔA2, ΔA3) werden hingegen als variabel deklariert.

So kann während des Betriebs in Abhängigkeit vom Verformungszustand eine Aktualisierung dieser Parameter vorgenommen werden. Bezugsbasis und Startwert für die ermittelten thermischen Parameter sind die Werte, die unter 1.2.3 als stationäre Parameter für den Roboter identifiziert worden sind.

### 1.2.7. Berücksichtigung des thermischen Fehtermodells bei der Bewegungsplanung

Zur Berücksichtigung der thermischen Parameter bei der Positions- und Bahnplanung muß eine Anpassung des Steuerungsmodells (thermisches Fehlermodell) erfolgen. Da die thermischen Parameter variabel sind, muß eine Möglichkeit zum regelmäßigen Abgleich des thermischen Fehlermodells im Betrieb geschaffen werden.

Bei dem vorliegenden, zu kalibrierenden Roboter wird ein nominales Modell zur Positions- und Orientierungsberechnung verwendet. In dieser Robotersteuerung liegt somit keine mathematische Beschreibung der Kinematik vor, die eine Berücksichtigung der ermittelten statischen und thermischen Parameter ermöglicht. Zudem kann in der aktuellen Steuerungssoftware keine Veränderung von Systemparametern während des Betriebs vorgenommen werden.

Aus diesen Gründen muß das thermische Fehlermodell in einem externen PC implementiert werden, der über eine serielle Schnittstelle mit der Robotersteuerung verbunden ist. Zur Berücksichtigung der thermisch bedingten Effekte muß im PC ein Konverter bereitgestellt werden. In diesem Konverter werden mit Hilfe des thermischen Fehlermodells berechnete Positionsdaten in Positionsdaten des nominalen Modells umgerechnet.

Die so unter Berücksichtigung der thermischen Parameter (Temperaturdrift) korrigierten nominalen Positionen werden dann über die serielle Schnittstelle zur Robotersteuerung übertragen und den abzuarbeitenden Roboterprogrammen zur Verfügung gestellt.

### 2. Anwendung der Erfindung am Beispiel "Meßroboter"

Zur flexiblen Automatisierung von Meßabläufen, beispielsweise in der Automobilindustrie, sollen zukünftig Roboter als Meßgeräte eingesetzt werden. Zur Messung der Maßhaltigkeit von Karosserieteilen wird ein laseroptisches Meßsystem an der Roboterhand angeordnet.

Einsatzhemmnis ist das unzureichende Positionierverhalten - bedingt durch zeitvariante, betriebsabhängige thermische Einflüsse. Zur Minimierung dieser Effekte kann das beschriebene Kalibrierverfahren eingesetzt werden. Die dafür notwendigen Einrichtungen und die Vorgehensweise werden nachstehend beschrieben.

### 2.1. Einrichtungen zur Online-Kalibrierung

Grundlage der Temperaturdriftkompensation ist die Bestimmung der aktuellen Positionsabweichung des Roboter-Endeffektors an Referenzpositionen im Arbeitsraum. Zur Messung der translatorischen Positionsabweichung wird das an der Roboterhand angeordnete Meßsystem genutzt.

Als Referenzkörper kommen Stahlwürfel zum Einsatz, die an Stangen aus Invarstaht mit hoher Maßbeständigkeit bei Temperaturschwankungen im Arbeitsraum stationär positioniert sind.

Zur Identifikation der signifikanten Parameter (vgl. 1.2.5) wurden insgesamt neun Referenzpositionen eingerichtet. Die Lage dieser Referenzpositionen ist beliebig - es ist lediglich darauf zu achten, daß möglichst große Achswinkelunterschiede zwischen den einzelnen Positionen realisiert werden.

### 2.2. Kalibrierzyklus

Zur Kompensation der Temperaturdrift an den genutzten Arbeitsraumpositionen wird ein sog. Kalibrierzyklus mit folgendem Ablauf definiert:
- Verfahrprogramm zur Messung der Positionsabweichung an den Referenzkörpern,
- Berechnung der thermischen Parameter und Aktualisierung des thermischen Fehlermodells,
- Berechnung der korrigierten Arbeitsraumpositionen für jede im Roboterprogramm enthaltene Meßposition,
- Konvertierung der berechneten Arbeitsraumpositionen in korrigierte nominale Arbeitsraumpositionen,
- Übertragung der korrigierten nominalen Arbeitsraumpositionen (Meßpositionen) in die Robotersteuerung.

### 2.3. Integration der Online-Kalibrierung in den Produktionsprozeß

Der Produktionsprozeß "Vermessen von Karosserieteilen" wird in zwei Routinen, den Kalibrierzyklus (siehe Abschnitt 2.2) und den Arbeitszyklus (Meßbetrieb, Vermessung des Karosserieteils), gegliedert.

Vor Produktionsbeginn (Beginn der Produktion nach Wochenenden, Produktwechsel) bzw. nach Produktionsunterbrechung (Aussetzbetrieb, Instandhaltung usw.) wird grundsätzlich ein Kalibrierzyklus zur Aktualisierung des thermischen Fehlermodells und zur Korrektur aller Meßpunkte durchgeführt. Anschließend kann der Meßbetrieb (Arbeitszyklus) aufgenommen werden.

Um eine gleichbleibend hohe Meßgenauigkeit während des Betriebs gewährleisten zu können, muß ein regelmäßiger Abgleich des thermischen Fehlermodells auf der Grundlage des aktuellen Verformungszustandes des Roboters erfolgen.

Um Nebenzeiten zu minimieren, die durch jeden Kalibrierzyklus bedingt sind, wird eine verformungsabhängige Regelung der Zeitintervalle zwischen zwei aufeinanderfolgenden Kalibrierzyklen eingeführt.
Diese Regelung basiert auf der zyklischen Überwachung der Positionierund Orientierungsgenauigkeit des Roboters an einem der Referenzkörper. Die Überwachung der Genauigkeit wird in den Arbeitszyklus integriert. Anhand der aktuellen Positionsabweichung an diesem Referenzkörper erfolgt die Entscheidung, ob erneut ein Kalibrierzyklus erforderlich ist oder der nächste Arbeitszyklus ausgeführt werden kann.

Der Schwellwert wurde in dem vorliegenden Ausführungsbeispiel auf eine summarische Abweichung von ≥ 0,1 mm bezüglich der vor dem letzten Kompensationszyklus gemessenen Abweichung am Referenzkörper festgelegt.

Der Referenzkörper zur Überwachung der aktuellen Positionier- und Orientierungsgenauigkeit ist so zu positionieren, daß das Anfahren dieser Position gut in den Bewegungsablauf des Arbeitszyklus integrierbar ist.

Es ist dem Fachmann offensichtlich, daß das vorstehend beschriebene Verfahren modifiziert werden kann, ohne dabei den Grundgedanken der Erfindung zu verlassen.

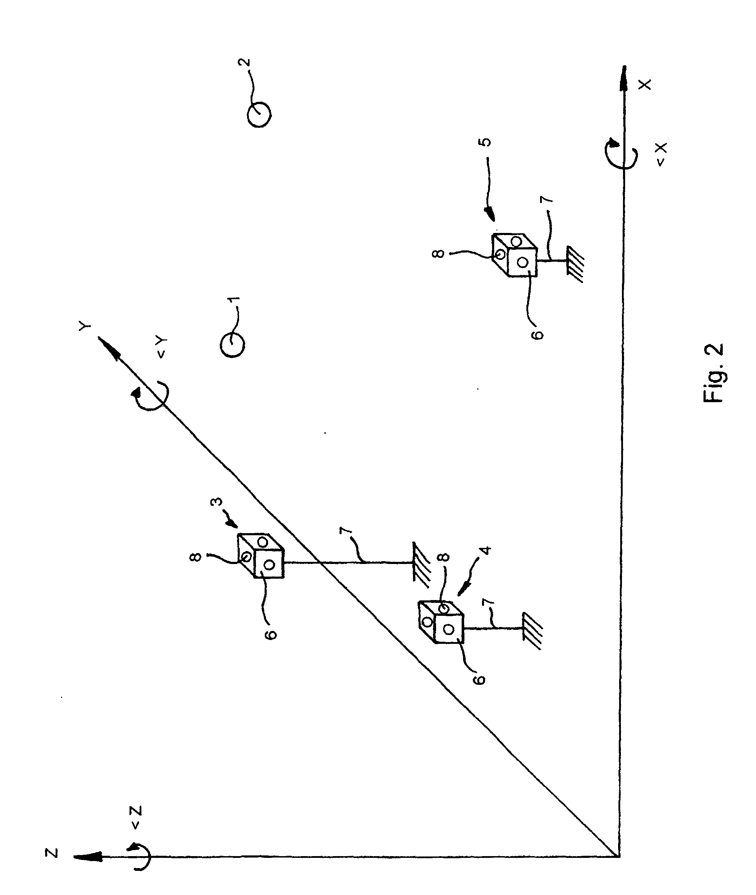

Nachstehend wird das Verfahren nochmals prinzipiell anhand einer Vorrichtung gemäß Fig. 2 näher beschrieben.

Der Arbeitsraum eines Roboters ist schematisch durch das Koordinatensystem x, y, z dargestellt. Innerhalb des Arbeitsraumes gibt es eine Vielzahl von Referenzpunkten RP_{U1}, von denen lediglich 5 dargestellt sind. Zwei der Referenzpunkten RP_{U1} sind als Kreise 1 und 2 dargestellt. Diese Referenzpunkten liegen im Bewegungsbereich des Roboters (nicht gezeigt) und sind daher als körperliche Referenzpunkte nicht geeignet. Die verbleibenden drei Referenzpunkte 3, 4, 5 liegen nicht im Bewegungsbereich des Roboters. Daher können in ihren Raumkoordinaten körperliche Referenzpunkte installiert werden. Im vorliegenden Beispiel sind es Stahlwürfel 6, die auf Stangen 7 befestigt sind. Die Stangen 7 sind im Boden verankert und bestehen aus einem Material mit besonders geringem Temperaturausdehnungskoeffizient. In den Stahlwürfeln 6 sind Bohrungen 8, die als Meßmarken dienen.

Wenn bestimmt wird, daß der Roboter an den drei Referenzpunkte 3, 4, 5 kalibriert werden soll, werden der Robotersteuerung die Koordinaten der Referenzpunkte mitgeteilt und der Roboter in diese Koordinaten gefahren. Mittels eines optischen Entfernungs- und Winkelmeßsystems, das in diesem Beispiel nahe am TCP angeordnet ist, werden die Abweichungen zwischen den Positionen und den Orientierungen des anzufahrenden Referenzpunktes und dem tatsächlich angefahrenen Raumpunkt ermittelt und dem Rechner zugeführt, in dem mit Hilfe des Fehlermodells Korrekturwerte zur Lagekorrektur errechnet werden. Diese Korrekturwerte werden der Robotersteuerung zugeführt, um den Positionierungs- und Orientierungsfehler des TCP zu korrigieren.

## Patentansprüche

1. Steuerverfahren für einen Roboter zum Verringern des Einflusses von Temperaturänderungen auf die Positionier- und 0rientierungsgenauigkeit des Roboters, der eine Steuervorrichtung und einen Rechner aufweist, wobei
- in einem nullten Verfahrensschritt
der Roboter, an dessen kinematischer Kette ein Meßpunkt - vorzugsweise beim TCP - angeordnet ist, bei konstanter Umgebungstemperatur langsam mit dem Meßpunkt eine Mehrzahl von Raumpunkten im Arbeitsraum des Roboters anfährt, wobei
mit einem externen Meßsystem die Koordinatenwerte **(x**_{**a**}**, y**_{**a**}**, z**_{**a**} und **∠x**_{**a**}**, ∠y**_{**a**}**, ∠z**_{**a**}**)** des Meßpunktes an den einzelnen Arbeitsraumpunkten genau vermessen und gespeichert werden und
diese Koordinatenwerte (**x**_{**a**}**, y**_{**a**}**, z**_{**a**} und **∠x**_{**a**}**, ∠y**_{**a**}**, ∠z**_{**a**}**)** mit den jeweils vom Roboter selbst bereitgestellten Koordinatenwerten **(x**_{**R**}**, y**_{**R**}**, z**_{**R**} und **∠x**_{**R**}**, ∠y**_{**R**}**, ∠z**_{**R**}**)** verglichen werden und als Abweichungen **(A**_{**stationär**}**)** abgespeichert werden, wobei
die Abweichungen **(A**_{**stationär**}**)** die erste Basis eines Fehlermodells sind, das die kinematischen Kette bei konstanter Temperatur beschreibt,
- in einem ersten Verfahrensschritt
der Roboter so bewegt wird, daß in den Antrieben der kinematischen Kette Wärme generiert wird und dann die im nullten Verfahrensschritt durchgeführte Vermessung des Meßpunktes einmal oder vorzugsweise mehrfach wiederholt wird und
die ermittelten Abweichungen als temperaturbedingte Abweichungen **A**_{**thermisch**} abgespeichert werden, wobei
die Abweichungen **A**_{**thermisch**} die zweite Basis des Fehlermodells sind, das die kinematischen Kette im aktuellen thermischen Zustand beschreibt,
wobei der nullte und der erste Verfahrensschritt zur Grundkalibrierung dienen und nur einmal oder in größeren Zeitabständen, insbesondere nach Reparaturen, ausgeführt werden,
- in einem zweiten Verfahrensschritt aus der Menge der vermessenen Raumpunkte eine erste Untermenge U1 ermittelt wird, deren Raumpunkte ein repräsentatives Temperaturdriftverhalten aufweisen, das repräsentativ für das Temperaturdriftverhalten aller Raumpunkte ist,
- in einem dritten Verfahrensschritt,
bei dem im Arbeitsraum des Roboters temperaturstabile Referenzpunkte RP_{U1} in den Raumkoordinaten der ersten Untermenge U1 angeordnet sind und an dem Meßpunkt des Roboters ein Meßgerät angeordnet ist,
die Referenzpunkte RP_{U1} zwischen den Arbeitsaktionen des Roboters nach einer vorbestimmten Zeitabfolge oder nach vorbestimmten Kriterien mit dem Meßgerät angefahren werden, wobei die aktuelle Lageabweichung des Meßpunktes mittels Abstands- und Winkelmessung vom jeweiligen Referenzpunkt ermittelt wird, und
- in einem vierten Verfahrensschritt
die aktuellen Lageabweichungen zwischen dem Meßpunkt und den Referenzpunkten RP_{U1} dem Rechner zugeführt werden, wobei
der Rechner aus dem im nullten und im ersten Verfahrensschritt ermittelten Fehlermodell Korrekturdaten für alle Raumpunkte des Arbeitsraumes errechnet und der Steuerelektronik des Roboters zuführt, um aus den ermittelten Positionier- und 0rientierungsfehlern der Referenzpunkte RPᵤ₁ die Positionier- und Orientierungsfehler aller Raumpunkte zu korrigieren.

2. Verfahren nach Anspruch 1, **dadurch gekennzeichnet, daß** nur die Positionierfehler ermittelt werden.

3. Verfahren nach Anspruch 1, **dadurch gekennzeichnet, daß** nur die Orientierungsfehler ermittelt werden.

4. Verfahren nach einem der vorhergehenden Ansprüche, **dadurch gekennzeichnet, daß** die im nullten Verfahrensschritt zu ermittelnden Meßwerte durch bekannte gerätetypische Durchschnittswerte ersetzt werden, wodurch der nullte Verfahrensschritt entfällt.

5. Verfahren nach Anspruch 1 bis 3, **dadurch gekennzeichnet, daß** die im nullten und im ersten Verfahrensschritt zu ermittelnden Meßwerte durch bekannte gerätetypische Durchschnittswerte ersetzt werden, wodurch der nullte und der erste Verfahrensschritt entfallen.

6. Verfahren nach einem der vorhergehenden Ansprüche, **dadurch gekennzeichnet, daß** eine Untermenge U₂ ermittelt wird, deren Punkte nur für einen ausgewählten Bereich des Arbeitsraumes eine repräsentative Temperaturdrift aufweisen.

7. Verfahren nach Anspruch 6, **dadurch gekennzeichnet, daß** weitere Untermengen U₃ bis U_{N} ermittelt werden, deren Punkte für jeweils einen ausgewählten Bereich des Arbeitsraumes eine repräsentative Temperaturdrift aufweisen.

8. Verfahren nach einem der vorhergehenden Ansprüche, **dadurch gekennzeichnet, daß** im nullten und im ersten Verfahrensschritt die Raumpunkte aus unterschiedlichen Richtungen von dem Meßpunkt angefahren werden,
wobei die dabei ermittelten Abweichungen als richtungsabhängige Abweichungen A_{UR} bei der Korrektur berücksichtigt werden.

9. Verfahren nach einem der Ansprüche 1 bis 8, **dadurch gekennzeichnet, daß** solche Raumpunkte aus einer Untergruppe ausgewählt werden, die näherungsweise auf einer Geraden liegen.

10. Verfahren nach einem der Ansprüche 1 bis 8, **dadurch gekennzeichnet, daß** solche Raumpunkte aus einer Untergruppe ausgewählt werden, die näherungsweise auf einer oder in einer Kugel oder auf oder in einem prismatischen Körper liegen.

11. Verfahren nach einem der Ansprüche 1 bis 8, **dadurch gekennzeichnet, daß** solche Raumpunkte aus einer Untergruppe ausgewählt werden, die näherungsweise auf einer Raum- oder Flächenform liegen, die aus einem Drahtgebilde nachformbar ist.

## Claims

1. A control method for a robot for the reduction of the influence of temperature changes on the positioning and orientation accuracy of the robot, the robot having a control apparatus and a computer, wherein
- in a zeroth method step,
the robot, in whose kinematic chain a measuring point is arranged (preferably at the TCP), slowly moves with the measuring point to a plurality of spatial points in the working space of the robot at a constant ambient temperature, with
the coordinate values **(x**_{**a**}**, y**_{**a**}**, Z**_{**a**} **and ∠x**_{**a**}**, ∠y**_{**a**}**, ∠z**_{**a**}**)** of the measuring point being accurately measured at the individual points of the working space using an external measurement system and stored; and
said coordinate values being compared with the respective coordinate values **(x**_{**R**}**, y**_{**R**}**, z**_{**R**} and **∠x**_{**R**}**, ∠y**_{**R**}**, ∠z**_{**R**}**)** made available by the robot and being stored as deviations **(A**_{**stationary**}**)**, with
said deviations **(A**_{**stationary**}**)** being the first basis of an error model describing the kinematic chain at a constant temperature;
- in a first method step,
the robot is moved such that heat is generated in the drives of the kinematic chain and then the measurement of the measuring point carried out in the zeroth method step is repeated once or preferably a plurality of times; and
the deviations determined are stored as deviations due to temperature **A**_{**thermal**}**,** with
the deviations **A**_{**thermal**} being the second basis of the error model describing the kinematic chain in the current thermal state;
with the zeroth and first method steps serving for basic calibration and only being carried out once or at fairly large intervals, in particular after repairs;
- in a second method step, a first subset U1 is determined from the set of the spatial points measured, with the spatial points of said subset U1 having a representative temperature drift behavior representative for the temperature drift behavior of all spatial points;
- in a third method step,
in which temperature-stable reference points RP_{U1} are arranged at the spatial coordinates of the first subset U1 in the working space of the robot and in which a measuring device is arranged at the measuring point of the robot,
the measuring device is moved to the reference points RP_{U1} between the working actions of the robot in accordance with a pre-determined time sequence or with pre-determined criteria, with the current positional deviation of the measuring point being determined by means of a measurement of distance and angle from the respective reference point; and
- in a fourth method step,
the current positional deviations between the measuring point and the reference points RP_{U1} are fed to the computer, with
the computer calculating correction data for all spatial points of the working space from the error model determined in the zeroth and first method steps and feeding said correction data to the control electronics of the robot in order to correct the positioning and orientation errors of all spatial points from the determined positioning and orientation errors of the reference points RP_{U1}.

2. A method in accordance with claim 1 **characterized in that** only the positioning errors are determined.

3. A method in accordance with claim 1 **characterized in that** only the orientation errors are determined.

4. A method in accordance with one of the preceding claims **characterized in that** the measurement values to be determined in the zeroth method step are replaced by known average values typical for the apparatus, with the zeroth method step being omitted.

5. A method in accordance with one of the claims 1 to 3 **characterized in that** the measurement values to be determined in the zeroth and first method steps are replaced by known average values typical for the apparatus, with the zeroth and first method steps being omitted.

6. A method in accordance with one of the preceding claims **characterized in that** a subset U₂ is determined whose points have a representative temperature drift only for a selected region of the working space.

7. A method in accordance with claim 6 **characterized in that** further subsets U₃ to U_{N} are determined whose points have a representative temperature drift only for a respective selected region of the working space.

8. A method in accordance with one of the preceding claims **characterized in that** the measuring point is moved to the spatial points from different directions in the zeroth and first method steps, with the deviations determined being taken into account in the correction as direction-dependent deviations A_{UR}.

9. A method in accordance with one of the claims 1 to 8 **characterized in that** such spatial points are selected from a subset lying approximately on a straight line.

10. A method in accordance with one of the claims 1 to 8 **characterized in that** such spatial points are selected from a subset lying approximately on or in a sphere or on or in a prismatic body.

11. A method in accordance with one of the claims 1 to 8 **characterized in that** such spatial points are selected from a subset lying approximately on a spatial or areal shape which can be reproduced from a wire structure.

## Revendications

1. Procédé de commande pour un robot afin de réduire l'influence des variations de température sur la précision de positionnement et d'orientation du robot, qui comprend un dispositif de commande et un calculateur, dans lequel :
-- dans une étape de procédé "zéro" le robot, dans lequel un point de mesure est agencé sur sa chaîne cinématique et de préférence au niveau du TCP, parcourt lentement à température ambiante constante avec le point de mesure une pluralité de points géographiques dans l'espace de travail du robot, étape dans laquelle
-- -- avec un système de mesure externe, les valeurs de coordonnées (xₐ, yₐ, Zₐ et *L*xₐ, *L*yₐ, *L*zₐ) du point de mesure au niveau des points individuels dans l'espace de travail sont mesurées exactement et mémorisées, et
-- -- ces valeurs de coordonnées (xₐ, yₐ, zₐ et *L*xₐ, *L*yₐ, *L*zₐ) sont comparées avec les valeurs de coordonnées (x_{R}, y_{R}, z_{R} et *L*x_{R}, *L*y_{R}, *L*z_{R}) préparées respectivement par le robot lui-même et mémorisées sous forme d'écarts (Aₛₜₐₜᵢₒₙₙₐᵢᵣₑ), et
-- -- les écarts (Aₛₜₐₜᵢₒₙₙₐᵢᵣₑ) forment la première base d'un modèle d'erreur qui décrit la chaîne cinématique à température constante,
-- dans une première étape de procédé, le robot est déplacé de telle manière que lors de l'entraînement de la chaîne cinématique de la chaleur est engendrée et la mesure du point de mesure exécutée dans l'étape de procédé zéro est répétée une fois ou de préférence plusieurs fois, et
-- -- les écarts déterminés sont mémorisés à titre d'écarts A_{thermique} fonction de la température, et
-- -- les écarts A_{thermique} forment la seconde base du modèle d'erreur qui décrit la chaîne cinématique dans l'étape thermique actuelle,
-- -- l'étape de procédé zéro et la première étape de procédé servent au calibrage de base et ne sont exécutées qu'une seule fois, ou à des intervalles temporels importants, en particulier après des réparations,
-- dans une deuxième étape de procédé, on détermine à partir du groupe des points géographiques mesurés un premier sous-groupe U₁ dont les points présentent un comportement de dérive de température représentatif, qui est représentatif pour le comportement de dérive de température de tous les points géographiques,
-- dans une troisième étape de procédé,
-- -- dans laquelle dans la chambre de travail du robot des points de référence stables en température RP_{U1} sont agencés dans les coordonnées dans l'espace du premier sous-groupe U1 et un appareil de mesure est agencé au niveau du point de mesure du robot,
-- -- les points de référence RP_{U1} entre les actions de travail du robot sont parcourus d'après une succession temporelle prédéterminée, ou d'après des critères prédéterminés, avec l'appareil de mesure, et l'écart de position actuel du point de mesure est déterminé à l'aide d'une mesure de distance et d'une mesure angulaire depuis le point de référence respectif, et
-- dans une quatrième étape de procédé,
-- -- les écarts de position actuels entre le point de mesure et les points de référence RP_{U1} sont fournis au calculateur, et
-- -- le calculateur calcule à partir du modèle d'erreur déterminé dans l'étape de procédé zéro et dans la première étape de procédé des données de correction pour tous les points dans l'espace de la chambre de travail et les fournit à l'unité électronique de commande afin de corriger, à partir des erreurs déterminées du positionnement et de l'orientation des points de référence RP_{U1}, les erreurs de positionnement et d'orientation de tous les points dans l'espace.

2. Procédé selon la revendication 1, **caractérisé en ce que** seules les erreurs de positionnement sont déterminées.

3. Procédé selon la revendication 1, **caractérisé en ce que** seules les erreurs d'orientation sont déterminées.

4. Procédé selon l'une des revendications précédentes, **caractérisé en ce que** les valeurs de mesure à déterminer lors de l'étape de procédé zéro sont remplacées par des valeurs moyennes connues typiques à l'appareil, grâce à quoi l'étape de procédé zéro est omise.

5. Procédé selon les revendications 1 à 3, **caractérisé en ce que** les valeurs de mesure à déterminer dans l'étape de procédé zéro et dans la première étape de procédé sont remplacées par des valeurs moyennes connues typiques à l'appareil, grâce à quoi l'étape de procédé zéro et la première étape de procédé sont omises.

6. Procédé selon l'une des revendications précédentes, **caractérisé en ce que** l'on détermine un sous-groupe U₂ dont les points présentent une dérive de température représentative uniquement pour une zone choisie de l'espace de travail.

7. Procédé selon la revendication 6, **caractérisé en ce que** l'on détermine d'autres sous-groupes U₃ à U_{N}, dont les points présentent une dérive de température représentative uniquement pour une zone choisie de l'espace de travail.

8. Procédé selon l'une des revendications précédentes, **caractérisé en ce que** dans l'étape de procédé zéro et dans la première étape de procédé, les points dans l'espace sont parcourus depuis le point de mesure à partir de différentes directions, et les écarts ainsi déterminés sont pris en compte lors de la correction sous forme d'écarts A_{UR} fonction de la direction.

9. Procédé selon l'une des revendications 1 à 8, **caractérisé en ce que** l'on choisit des points géographiques à partir d'un sous-groupe qui sont approximativement disposés sur une droite.

10. Procédé selon l'une des revendications 1 à 8, **caractérisé en ce que** l'on choisit des points géographiques à partir d'un sous-groupe qui sont approximativement disposés sur ou dans une sphère, ou sur ou dans un corps prismatique.

11. Procédé selon l'une des revendications 1 à 8, **caractérisé en ce que** l'on choisit des points géographiques à partir d'un sous-groupe qui sont approximativement disposés sur une forme tridimensionnelle ou une forme bidimensionnelle qui peut être reproduite à partir d'une structure filaire.
